# EUROPEAN PATENT APPLICATION

(11) **EP 2 966 567 A1**
(43) Date of publication of application: **13.01.2016**
(21) Application number: 14176395.3
(22) Date of filing: 09.07.2014
(51) Int. Cl.: G06F 9/50, G06F 1/32, G06Q 50/00

(54) **Accounting for virtualized IT infrastructure and innovative electrical power saving rules**

(71) Applicant: Atos IT Solutions and Services GmbH, 81739 München (DE)
(72) Inventor: Kraus, Rudi, 67158 Ellerstadt (DE); Vetter, Jürgen, 67435 Neustadt (DE); Abert, Michael, 67240 Bobenheim-Roxheim (DE)
(74) Representative: Patentanwaltskanzlei WILHELM & BECK

(57) **Abstract**

A plurality of services is hosted on a mutable configuration of one or more execution units. A method for hosting the services comprises steps of determining a computational power provided by the execution units, determining an electric power consumed by the execution units, determining a cost per service based on the electric power (kWh) and the computational power and workunits, determining a service performance and adjusting the configuration in order to improve a configuration efficiency, expressible by a relationship between the cost per service and the performance.

The invention provides a technique to find a compute node or several compute nodes to start new services, or to find compute nodes in case of hardware failure or disaster scenarios with optimized availability and price performance ratios and to shutdown inefficient compute nodes through relocation of the application instance to more efficient compute nodes.

## Description

Present invention concerns the management of a datacentre running with a plurality of physical or virtual compute nodes or devices running the application load of hundreds or thousands of application instances of the same or different type.

A computer service is based on a single application or in other cases comprises a plurality of application systems that interact with each other. Each application system may comprise one or more application instances and each application instance may be run on a virtual or physical server. Both kinds of servers may employ for execution one or more physical execution units which are commonly realized as CPUs or cores of CPUs, or virtual siblings.

On the other hand, execution units may be grouped to physical servers which in turn may be grouped to pools (clusters) of which several may be comprised by a datacentre. A set of execution units that contribute to running a specific computer service normally perform other tasks as well so that the electric power the execution units consume is not necessarily the same as the electric power required for running the computer service.

It is therefore difficult to determine how much electric power (expressible for instance in kWh) is actually required for execution of a specific computer service over defined cycles.

The assignment of execution units on the same or different physical or virtual servers to a plurality of application instances which belong to the same or different services is called a configuration. The configuration is subject to change in a way that the performance and availability requirements are fullfiled and the power consumption is optimized.

In one example a computer service provides a payroll. The payroll service comprises a web server application for human interaction, a database application for storing and retrieving data and a communication application for securely passing data or messages between the different applications. Each of the applications may comprise one or more instances and the number of instances or threads per instance may be dynamically adjustable. Should for example many persons try to interact with the payroll service at the same time, the used resources of web server application instances may be automatically increased. Each application instance runs on a server. Some of the servers may be physical servers with a predetermined number of execution units, some may be run on virtual servers each of which runs on top of one or more physical servers and provides the power of one or more virtual execution units. Eventually, however, each virtual execution unit is represented by sharing a physical execution unit with other virtual excecution units named siblings. An execution unit may be a core of a CPU. A CPU may have more than one core. Sometimes, there may even be virtual siblings that are represented by an abstraction of the available physical cores.

Operation cost of a datacentre for hosting services is generally based on the consumption of electric power and possibly additional efforts such as a cooling effort. When a CPU performs lower than it is physically able to, a power consumption of the CPU will generally decrease. It is possible to operate modern CPUs on different power levels that allow different levels of computational performance. However, when energy consumption of the hardware carrying out a part of a computer service is reduced, performance of that part is also reduced. If the part in question is an application, the application may get logically overloaded and other applications of the same computer service may have to wait for the overloaded application. Overall performance of the computer service may thus drop dramatically.

In order to conserve electric energy, however, it is desirable to have a method for adjusting the configuration of execution units for the mix of services in such a way that energy-efficient service operation and service availability is improved.

The invention solves the given object through a method with the features of the independent claim. Dependent claims give preferred embodiments.

A service is hosted on a mutable configuration of one or more execution units together with other services. A method for hosting the service comprises steps of determining a computational power provided by the execution units, determining an electric power consumed by the execution units, determining a cost per service based on the electric power and the computational power, determining a service performance and adjusting the configuration in order to improve a configuration efficiency, expressible by a relationship between the cost per service and the performance.

Unlike previous approaches, in which the configuration of the service was optimized with respect to computing power alone, the consumption of electric energy caused by the service may now also be accounted for. Moreover, the overall performance of the system may be optimized so that a situation may be avoided in which a small saving in electric energy is accompanied by a big loss in service performance.

The service may especially comprise a computer based or computer executed service such as an Enterprise Resource Planning, or Customer Relationship Management system. The execution units may be physical objects that provide computational power for which provision they consume electric power. The computational power may be used to execute an application or application instance that is part of the service. The method is especially useful for a distributed service such as a service running in a data centre comprising a large number of execution systems or in several distributed data centres. In one embodiment, the service may also be run on an abstract hardware configuration that is known as a cloud.

By providing the given cost measure it is possible to bill running of the services such that for the customer running the services a motivation for saving electric energy is given. It furthermore allows the actual saving of electric energy by changing the configuration in an appropriate way. Thus, an emission that is associated with the provisioning of electric power, such as CO2, for the execution units may be reduced. Running the services may thus be carried out in an environment-friendly fashion.

Generally, a relationship between the provided computational power and the performance for all services is non-linear. It may therefore not be sufficient to reduce the computational power while maintaining an acceptable level of performance for all services. Instead it is proposed to balance the number of execution units and their individual computational powers with the demands of the services in order to increase efficiency of the services.

A service may for instance comprise two application instances. When activity of the service gets low, a configuration of execution units for carrying out the application instances is changed. However, simply reducing the available computational power for one of the services may create a bottleneck problem that may require increased computational power for the other service. It is therefore necessary to reduce the available computational power such that the service remains balanced and does not require excessive electrical power.

In one variant, adjusting is carried out such as to minimise cost for the performance. This may especially be appropriate if the service is known to require a constant level of performance. In the above example, the second change would be preferred in this variant.

In an other variant, the adjusting may be carried out such as to maximize performance for the cost. This may for instance be appropriate for a service that is desirable to be run in as short a time as possible while maintaining a predetermined cost frame. In the above example, the first change would be preferred in this variant.

The different optimization goals of the two mentioned variants may lead to different configurations of the execution units and the applications instances which run at the same execution unit. Through the changed configurations, an additional degree of flexibility for running the service may be possible.

Adjusting may comprise adding an execution unit to the configuration. This way, computational power may be increased quickly.

On the other hand, the adjusting may comprise removing an execution unit from the configuration. Unused computational power may thus quickly be returned to a pool so that cost for the runner of the service is reduced and efficiency of the configuration may be increased.

In yet another embodiment at least one execution unit of the configuration can be operated on different electric power levels and each power level is associated to a specific computational power. In this, adjusting the configuration may comprise changing the power level of the execution unit.

In this preferred embodiment identical execution units may be comprised by the configuration and increasing and decreasing of computational power may accomplished by selecting appropriate power levels of at least one of the execution units. The power levels may be changed by increasing or decreasing a clock rate by which the execution unit is running, as a clock change may influence the electric energy consumption. In another embodiment, additional power saving features of the execution unit may be associated to the power levels. For instance, parts of the execution unit may be put to a sleep mode where they are either deactivated or operated slower. A deactivated subunit of the execution unit may be woken up through a dedicated system on the basis of time or an event. Typically, the more power is saved in a specific mode of operation, the longer it takes to restore full computational power to the execution unit.

Generally, a relationship between computational power and electric power is non-linear. It may be so that a big decrease in electric power provides only a small decrease in computational power and vice versa. A percentage of increase or decrease on the electric power side is thus generally not linearly related to an increase or decrease of computational power.

In one embodiment, a reconfiguration cost is minimised wherein the reconfiguration cost comprises a degradation of service performance over a predetermined reconfiguration time. During the process of moving from one configuration to another, service performance may be degraded. By accounting for this, frequent configuration changes may be prevented. Especially, the cost for changing a configuration may be weighed against a possible saving between two configurations. In one embodiment a present configuration may be maintained until the cost for changing from a previous configuration into the present configuration is amortized through savings relative to the previous configuration.

In one embodiment, an estimation is made how long a changed configuration can be maintained and adjusting is withheld if the improved efficiency after reconfiguration does not add up to the reconfiguration cost over maintaining time. By making the indicated forecast, only configuration adjustments that are projected to accomplish a net gain may be carried out. Overall cost savings and overall efficiency may thus be increased. In yet another embodiment the service cost is determined on the additional basis of a facility operation cost. It is preferred that energy requirements of a facility that hosts the execution units are assigned to running services through a key that is based on the electric power consumption of the associated configuration of execution units. In addition, a fixed effort in electric energy or other resources for running the facility may be added.

In yet another embodiment the configuration may be adjusted such as to minimise a facility operation cost. For instance, it may be desirable that a configuration comprises execution units that are not too close to intensively used other execution units so that thermal discharge of the execution units of the configuration may be better distributed.

The complexity of compute nodes and distributed applications like ERP Systems or in-memory databases like SAP HANA has tremendously increased in the last years. Multithreading, non uniform memory architecture (NUMA) hierarchical cache systems and hyperthreading had a huge impact on the performance, the computing capacity and the power consumption of a modern computing node. In this sense a storage system can be regarded as a specialised computing node.

A service may comprise one or several application instances wherein some of the application instances may run directly on one or more physical execution units and some on one or more virtual execution units.

The application instances use resources of a compute node, namely that of the execution units (CPUs) and memory. The efficiency of an application instance depends on the cup and memory usage in congruence to other application instances running in the same environment. The cache hits or misses in a memory cache, the usage of direct memory or the need to use remote memory is relevant information for an optimization process.

Together with the efficiency of the application instance operation its energy consumption work may differ between configurations. A CPU type, a memory type, a clock rate and memory consumption together with a CPU memory architecture and a memory size influence both the computing power and the power consumption of a node.

A datacentre typically has a mix of differently sized computing nodes physical and virtual. The computing nodes may differ in type of CPU, clock rates, CPU counts, core counts, cache sizes and cache architecture as well as size of memory, type of memory, clockrate of memory, bank usage and others. Together with different operating systems (OS) in different versions and configurations and different virtualization techniques and the sizing of the virtual servers there are thousands of possible configurations to run a given application workload on such environments. In other words it is a task of present invention to find a configuration of the available infrastructure that permits efficient running of given application instances for a pluraty of services.

The present invention defines a technique to optimize such dynamic data centres in combination with given rules, static and dynamic ontologies with relevant attributes of physical and virtual datacentre environments related to application based ontologies. Administrative interventions and autonomous decisions to automate data centre optimisation processes may be used. This can be differentiated into the following cases.

### 1. Find computing nodes to start additional application instances in a datacentre

The datacentre service composition can be influenced in the start phase of one or several application instances to decide on which node the application instance has to be started.

### 2. High availability scenarios

In case of high availability in n:m cluster solutions several nodes have the ability to take over an application instance. The takeover decision can be made under consideration of the power consumption.

### 3. Data centre expansion or replacement of hardware elements

New physical or virtual servers can be placed or replaced in a datacentre in minutes without downtime for other components. The invention helps or automates identify and relocate application instances to the new or changed environment.

The physical hardware architecture with count of CPUs, type of CPUs, cycle times, first, second and third level caches sizes, main memory, type of memory (NUMA architecture) and the connection to the CPUs and cores influence the efficiency and power consumption for a given application work.

On an application system with several application instances, the instances have more or less dependencies to each other which leads to more or less efficiency in a given environment.

In data centres typically hundreds of similar or different application instances are running together. The distribution of the application instances to the different physical or virtual servers and the relationship, hierarchy and priority to each other influence the efficiency, response times and power consumption. Each application instance has typically a characteristic curve on a daily, weekly, monthly or annual base.

To generate the knowledge base and ontologies for the optimization decisions a calibration application which can produce a repeatable load for different application instance types, e.g. highly multithreaded, partly threated, cache level usages data load from network storage, or direct attached storage und main memory usage to produce the set of characteristics curves together with a definite OS or hypervisor environment.

A reference application instance (like the calibration application) is used in operation mode to correlate with unknown applications running together in the landscape and to guarantee the quality of the measurement in the dynamic datacentre.

The invention will now be described in more detail with reference to the enclosed figures, in which
- Fig. 1: shows a schematic of a computer system for hosting a service;
- Fig. 2: shows a flow chart of a method for hosting the service on the configuration of Fig. 1 and
- Fig. 3: shows an exemplary relationship between a computational power, a number of execution units and a service performance.

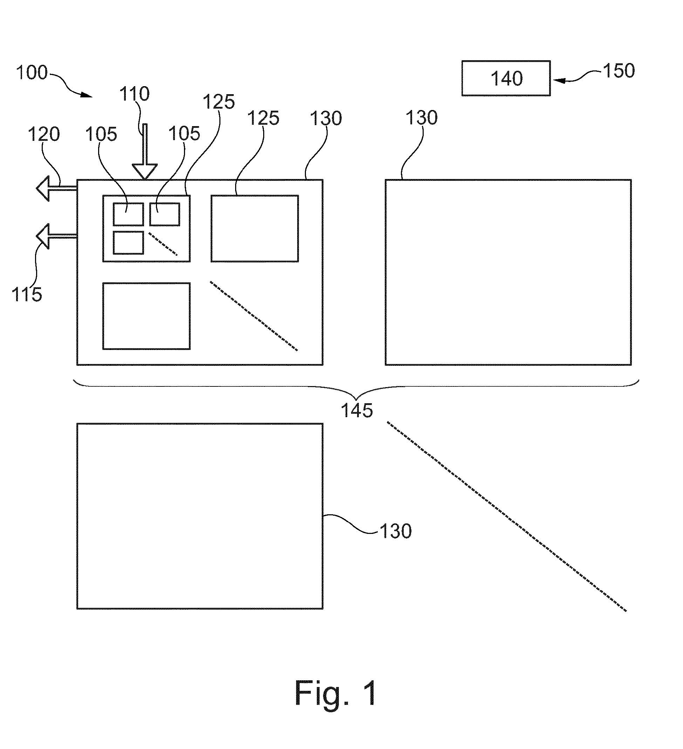

Figure 1 shows a schematic of a computer system 100 for hosting a service. The computer system 100 may be comprised by a facility such as a data centre or it may be distributed geographically, in which case elements of the computer system 100 may or may not be separated by large physical distances. A physical distance may be considered large when two computer elements do not share the same hosting facility.

The system 100 comprises a number of execution units 105 which may be implemented as a central processing unit (CPU) of a computer machine or a core of such a CPU. Technically an execution unit 105 consumes electric power 110 and provides a computational power 115. Most of the electric power 110 is transformed into thermal power 120, which may require an additional effort to remove from the execution unit 105. In the present context, the effort required for removing the thermal power 120 is considered to be part of the electric power 110 itself. For instance, if the electric power of an execution unit is 100 watt and cooling the execution unit 105 requires another 50 watt for ventilation, the electric power 110 for the execution unit 105 is considered to be 150 watt. The computational power 115 may for instance be calculated in instructions per second (IPS) or floating point operations per second (FLOPS); different marginal conditions for these figures may apply.

Although a modern CPU may support more than one core and allow independent assignment of different physical cores to different services and even permit "siblings", which are some kind of virtual cores, it is the execution unit 105 that is after all the physical object that consumes the electric power 110 and provides the computational power 115. Abstractions like virtual cores may or may not be part of the system 100.

Execution units 105 may be grouped, virtualized or regrouped in different ways. For instance, several CPUs 125, each containing one or more physical or virtual cores 105, may be part of one server 130. Every CPU and/or core may be connected to a cache or a series of caches of several levels. An execution unit 105 may comprise memory 106 that is local or remote. In the latter case the memory 106 may be accessed via a network. There may also be one or several levels of cache 107 and 108. Caches 107, 108, especially in hierarchical configuration, may increase the CPU efficiency. Network adapters 111 and storage adapters 112 connect the computer systems 130 to each other and to specialized storage nodes may also be provided.

Several servers 130 may form a blade, several blades may be comprised by a shelf, several shelves may form a pool and several pools may form a frame. Some of these groupings may be physical and others may be logical. Different naming and different numbers of hierarchy levels may be employed. In the end, a plurality of execution units 105 are physically or logically dedicated to a datacentre. A datacentre hosts a plurality of logical systems of the same type or of different types. In this, which each service may have one or several instances which are the base for services 140. A datacentre with a set of running services distributed over the physical and virtual computing nodes will here be called a configuration 145. The configuration 145 is mutable in that execution units 105 may be added, removed or reconfigured, or application instances belonging to the service 140 may be started, stopped or relocated.

Upper and lower limits for the number of execution units 105 of a configuration 145 may depend on the service 140. The service 140 may for instance comprise an SAP SID with several SAP instances such as database, application server and others. Depending on the configuration 145, a service 140 will show a certain performance 150. The performance 150 may be measured in any known way. In the above example of an SAP system, the performance 150 may specifically be determined in SAP application performance standard (SAPS) equivalents or any other hardware independent performance value.

It is proposed to use a cost function for the configuration 145 that is not only dependent on the computational power 115 used for CPU and memory 106 provided by the execution units 105 of the configuration 145 but also on the electric power 110 the execution units 105 consume. Of two pieces of hardware a first one may consume more electrical power (in Watt) than a second one. On the other hand, the second one may have more computing power so that it may finish a given task in less time (in seconds) than the first one. A predetermined cost may therefore be associated with an electric power 110 of one Ws (1 Watt x 1 second). Another cost may be associated with a computational power 115 of a predetermined number of SAPs aquivalents. Both costs may be expressable in money or a different unit and a conversion factor may be employed to allow adding the cost for computational power 115 and that for electric power 110. The resulting costs may be periodically accumulated to provide an overall cost for the services 140 over time.

It is furthermore proposed to set the overall cost in relationship with the performances 150 and the workunits like cpu seconds or SAPs seconds that are consumed for running the services. By dividing the cost through the performance or vice versa, a measure for an efficiency of running the services 140 on the configuration 145 can be determined. It may be advantageous to adjust the configuration 145 such as to improve the efficiency.

In an actual installation it may be required to install processes on different hierarchical levels in order to determine performance, electric and computational power. A process may comprise a piece of software that determines said parameter and evaluates it or passes it on to another process. Lower level processes may report to higher level processes and in the end an overall efficiency for the service 140 may be determined.

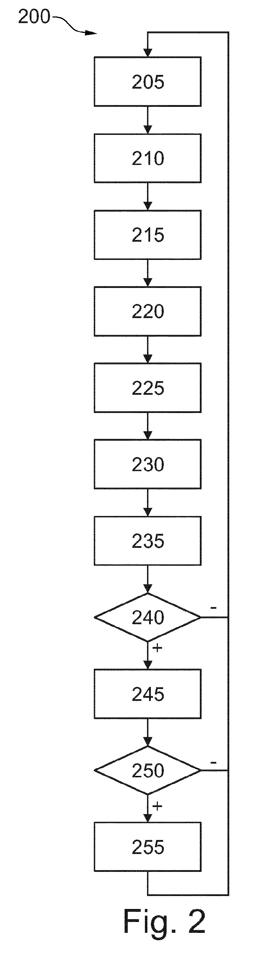

Figure 2 shows a flow chart of a method 200 for hosting the service 140 on the configuration 145 on the system 100 of Figure 1. Method 200 may be executed for several services 140 running in a data centre so that an optional first step 205 comprises selecting the service 140 in question.

In a following step 210, the configuration 145 is determined. As explained above, the configuration 145 comprises all the execution units 105 set aside for running the service 140. In a case where one execution unit 105 is shared between several services 140, only effective values for electric power 110 und computational power 115 of that execution unit 105 for the service will be used. Should, for instance, an execution unit 105 be assigned to the service 140 only 40% of the time, then the electric power 110 that is used for the complete execution unit 105 as well as the computational power 115 that is provided by the execution unit 105 will be accounted for the service 140 at a fraction of 40% only.

Should, in a different example, the execution unit 105 run in a low power mode for a given service 140, for instance at only 30% of its maximum clock rate, both the electric power 110 and the computational power 115 will be reduced. A relationship between the reduction of the clock rate and the reduction of the computational power 115 of execution unit 105 may be linear, at least in first approximation.

On the basis of these considerations, the computational power 115 of the configuration 145 is determined in a step 215. Likewise, the electric power 110 of the configuration 145 is determined in a step 225. For the same time period or instance, the performance 150 of service 140 is furthermore determined in a step 230.

In a step 235, a cost for the service 140 is determined on the basis of the electric power 110 determined in step 225 and the computational power 115 determined in step 215. On the basis of the overall cost, efficiency of the configuration 145 is determined. The efficiency is by preference determined by dividing the performance 150 by the determined cost. A reciprocal value may alternatively be used. On the basis of the determined efficiency, the configuration 145 may then be adjusted.

To this end, it may be determined if a more efficient configuration is known, in a step 240. As mentioned above, adjusting the configuration 145 in order to improve its efficiency may be carried out such as to minimise cost for a given performance 150 or such as to maximize performance 150 for a given cost.

In one embodiment, a more efficient configuration 145 may be determined but activation of the adjusted configuration 145 may be subject to a comparison of reconfiguration cost with potential cost savings.

The reconfiguration itself may impair performance 150 of the service 140 for a predetermined time. To avoid unnecessary or ineffective changes in the configuration 145, it may be determined in a step 240 for how long a time the adjusted configuration 145 (target configuration) can be maintained. Such forecast may be done on an arbitrary basis like with a heuristic, based on previous observations. Then, in an optional step 250, it is determined if the reconfiguration cost, i.e. the accumulated loss of efficiency during reconfiguration, is bigger than savings achievable through the target configuration 145 during the time the target configuration can be maintained. If this is the case, adjustment may be withheld and method 200 may branch back to the beginning and run through again.

In a succeeding step 255 the configuration 145 may be adjusted to improve its efficiency. To this end, a an execution unit 105 may be added or removed from the configuration 145 or an execution unit 105 may be operated on a different electric power level that is associated a different computational power, or other services who run in congruence on the same excecution unit may be relocated to other excecution units.

In one option of method 200 a configuration for a service is determined at the time the service is started. To this ends, the application instances of the applications that make up the service may be started on a particular frame, pool or group of systems in a datacentre.

In another option the service may be run in a high availability mode. A so-called n:m cluster hosts n processes on m nodes. That is if a problem arises with a computing node - virtual or physical - an application instances hosted by that node is transferred to another node. The decision to which node it will be transferred may be made according to the above analysis of performance and energy consumption.

An application instance or application may also be relocated to a different node or group of nodes on the basis of other causes like a manual intervention. This relocation may also be optimized by the given selection process for the target node or group of nodes.

Relocation of an application instance may be influenced by an overall load level in a set of computing nodes. Should for instance in a datacentre with a predetermined number of nodes the overall load be high a de-escalation rule may be applied. In this case the power consumption of a server with lower prioritized services may be reduced. Such a configuration change may be performed without a relocation of an application instance.

A similar scheme may be applied in the case of high temperature in a datacentre. Cooling problems may thus be addressed on a service level.

According to yet another embodiment, a service, application or application instance may be relocated from a hot zone in a datacentre to a cooler zone. In other words a situation where the accumulation of execution units with a high electrical load in a confined physical space is avoided if possible. Heat dissipation of the execution units may thus be spread evenly over a datacentre. Such relocation may also be performed automatically.

A group of computing nodes, e.g. a server or a group of servers, may enter a power saving mode in a definable time slice like during the night or during the weekend. It is also possible to detect if a service, application or application instance has an untypical resource consumption or resource consumption change. In this case, a configuration may be changed to isolate a component in question. Both detection and relocation may be done automatically.

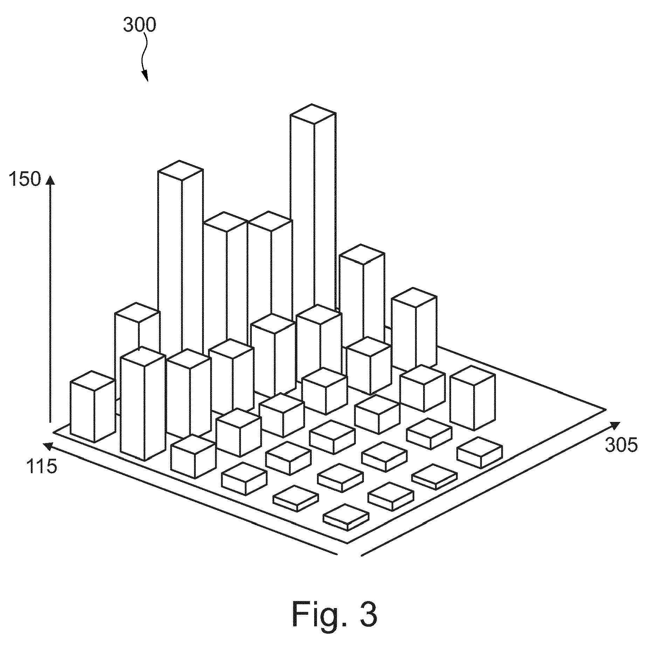

Figure 3 shows a characteristic diagram 300 with an exemplary relationship between a computational power 115 (growing in an upper right direction), a number 305 of execution units 105 comprised by the configuration 145 (growing in an upper left direction) and the service performance 150 (growing vertically). The characteristic diagram 300 may be used for instance in step 240 of method 200 discussed above with reference to Figure 2.

It can be seen that the performance 150 generally increases when the computational power 115 of the configuration 145 is increased. Such increase may e.g. come from a higher clock rate in one or more of the execution units 105. On the other hand, mostly but not always will an increased number 305 of execution units 105 lead to a better performance 150. In some cases, performance 150 may decrease when an execution unit 105 is added to a configuration 145, even though the associated computational power 115 increases.

It should be noted that an ordinary balancing scheme that allocates or disallocates an execution unit to a configuration based on computational power requirements alone may be endorsed with present technique in which electrical power consumption is additionally considered for determining an optimal configuration.

The distribution of services, applications or application instances to several physical or virtual servers may be assigned through an auction as an alternative to the try and error approach as described with respect to figure 2. Through the auction it may be determined which execution unit fits best for a service, application or application instance. Such an auction may especially be used for a disaster failover scenario where a lot of application instances have to be restarted at the same time on available physical or virtual devices.

There may be auction decision rules that reflect for a failed application instance the priority, the resource consumption profile, the membership to an application or application system, the availability rules of an application instance and which other application instances are ready for taking over the load of the failed application instance.

Application agents running on every excecution unit, physical or virtual, may be provided for determining which application instance runs where and what performance and/or resources it consumes. Such agents may also determine static or dynamic performance parameters of the excecution units. In case of bad performance or information about high power consumption the application agent may open an auction for taking over all or some application instances.

In an auction, every application agents checks if he can optimize the availability, the performance, or the power consumption of the application instance that is subject to the auction and determines which application instances it may take over. Every application agent decides to apply or not to apply, that is, whether or not it places a bid in the auction. Every bid contains values relevant for a target configuration and/or a configuration change, so that, depending on the type of the auction, a ranking list can be produced. The ranking list may contain offers of application agents for taking over certain application instances, sorted by preferrability.

After a predetermined auction time, every application agent or an specialist control agent can determine the winner of the auction.

An auction can be placed more or less locally, that means only excecution units in the same group or pool can apply. Every application agent checks cyclically or after an specific event for relevant auctions.

For several tasks different types of auctions can be placed and every auction can have its own results or decision rules.

On the other hand, a control agent may open an auction to find a node for starting new application instances.

The auctions can help to find bad configurations, can lead to reconfiguration or relocation plans on the basis of static and dynamic knowledge about the physical and virtual environment and the static and dynamic behaviour of the application instances.

### Reference List

- 100: system
- 105: execution unit
- 106: memory
- 107: 1^{st} level cache
- 108: 2^{nd} level cache
- 110: electrical power
- 115: computational power
- 120: thermal power
- 125: CPU
- 130: server
- 135: cluster
- 140: service
- 145: configuration
- 150: performance

- 200: method
- 205: select service
- 210: determine configuration
- 215: determine computational power
- 225: determine electrical power
- 230: determine service performance
- 235: determine cost and configuration efficiency
- 240: more efficient configuration known?
- 245: estimate configuration holding time
- 250: reconfiguration cost < cost savings over holding time?
- 255: adjust configuration

- 305: number of execution units

- 300: characteristic diagram

## Claims

1. Method (200) for hosting a service (140) on a mutable configuration (145) of one or more execution units, the method (200) comprising the following steps:
- determining (215) a computational power (115) provided by the execution units;
- determining (225) an electric power (110) consumed by the execution units;
- determining (235) the cost per service based on the electric power (110) and the computational power (115);
- determining (230) a service performance (150) and
- adjusting (255) the configuration (145) in order to improve a configuration (145) efficiency, expressible by a relationship between the cost per service and the performance (150).

2. Method (200) according to claim 1, wherein a relationship (300) between the provided computational power (115) and the service performance (150) is non-linear.

3. Method (200) according to claim 1 or 2, wherein adjusting (255) is carried out such as to minimise cost for the performance (150).

4. Method (200) according to claim 1 or 2, wherein adjusting (255) is carried out such as to maximise performance (150) for the cost.

5. Method (200) according to one of the above claims, wherein adjusting (255) comprises adding an execution unit to the configuration (145).

6. Method (200) according to one of the above claims, wherein adjusting comprises removing an execution unit from the configuration (145).

7. Method (200) according to one of the above claims, wherein an execution unit (105) of the configuration (145) can be operated on different electric power (110) levels and each power level is associated to a specific computational power (115), and wherein adjusting (255) comprises changing the power level of the execution unit (105).

8. Method (200) according to claim 7, wherein a relationship between computational power (115) and electric power (110) is non-linear.

9. Method (200) according to one of the above claims, wherein a reconfiguration (145) cost that comprises a degradation of service performance over a predetermined reconfiguration (145) time is minimised.

10. Method (200) according to claim 10, wherein an estimation is made (245) how long a changed configuration (145) can be maintained and adjusting (255) is withheld (250) if the improved efficiency after reconfiguration (145) does not add up to the reconfiguration (145) cost over maintaining time.

11. Method (200) according to one of the above claims, wherein the service cost is determined on the additional basis of aw facility operation cost.

12. Method (200) according to one of the above claims, wherein the configuration (145) is adjusted (255) such as to minimise a facility operation cost.
